# EUROPÄISCHE PATENTSCHRIFT

(11) **EP 3 206 915 B1**
(45) Veröffentlichungstag und Bekanntmachung des Hinweises auf die Patenterteilung: **22.08.2018**
(21) Anmeldenummer: 15762598.9
(22) Anmeldetag: 10.09.2015
(51) Int. Cl.: F16L 3/10

(54) **BEFESTIGUNGSVORRICHTUNG FÜR EINE LEITUNG IN EINEM FAHRZEUG**
MOUNTING DEVICE FOR A CABLE IN A VEHICLE
DISPOSITIF DE MONTAGE POUR UN CÂBLE DANS UN VÉHICULE

(30) Priorität: 17.10.2014 DE 102014221104
(43) Veröffentlichungstag der Anmeldung: 23.08.2017
(73) Patentinhaber: Robert Bosch GmbH, 70442 Stuttgart (DE)
(72) Erfinder: LOEBE, Thomas, 99817 Eisenach (DE)
(86) Internationale Anmeldenummer: PCT/EP2015/070675
(87) Internationale Veröffentlichungsnummer: WO 2016/058758

(56) Entgegenhaltungen:
- DE-A1-102010 043 565
- DE-A1-102011 010 998
- JP-A- 2013 013 232
- US-A- 4 248 459
- US-A- 4 564 163
- US-A1- 2002 000 499

## Beschreibung

Die Erfindung geht aus von einer Befestigungsvorrichtung für eine Leitung in einem Fahrzeug, nach der Gattung des unabhängigen Patentanspruchs 1.

Aus dem Stand der Technik sind Befestigungsvorrichtungen für Leitungen, insbesondere für elektrische Kabel in einem Fahrzeug bekannt, welche die radiale und axiale Position des Befestigungselements mit der Befestigungsstruktur an der Leitung festlegen. Solche elektrischen Kabel werden im Fahrzeug beispielsweise zur elektrischen Verbindung von Sensoren, welche an einem Kabelende angeordnet sind, mit korrespondierenden Auswerte- und Steuerschaltungen verwendet, welche am anderen Kabelende angeordnet sind. Hierbei ist insbesondere die Vorgabe der radialen Position der Befestigungsstruktur während der Sensorproduktion aufgrund von Anforderungen an das Mantelmaterial des Kabels und die unkontrollierte radiale Position des umspritzten Sensorkopfes schwierig, welcher direkt mit dem Kabel verbunden ist. Dies führt zu großen radialen Toleranzen für die Befestigungsstrukturen, was bei der späteren Montage des Kabels im Fahrzeug zu Problemen führen kann. So kann die Befestigungsstruktur der Befestigungsvorrichtung nach dem Einbau des Sensors in Bezug auf eine Befestigungsöffnung in der Fahrzeugkarosserie an einer falschen radialen Position angeordnet sein, so dass das Kabel verdreht werden muss, damit die Befestigungsstruktur in die Befestigungsöffnung eingeführt werden kann. Die kann zu einer unerwünschten Torsionsbelastung des Kabels führen.

Aus der DE 10 2010 043 565 A1 ist beispielsweise eine Befestigungsvorrichtung für eine Leitung, insbesondere für ein elektrisches Kabel in einem Fahrzeug, bekannt, welche eine Tülle aufweist, welche die Leitung umschließen kann und mit welcher die Leitung an einem Halter arretiert werden kann. Die Tülle weist hierzu eine Kontur auf, die in einer Aussparung des Halters lösbar befestigt werden kann. Die Tülle ist zumindest teilweise mit einem elastisch verformbaren Material ausgebildet. Die Tülle weist wenigstens zwei Tüllenteilbereiche auf, welche derart zumindest teilweise voneinander trennbar sind, dass die Leitung in einem vormontierten Zustand in einen Innenbereich der Tülle eingelegt werden kann, und welche ferner derart miteinander verbindbar sind, dass die Leitung in einem montierten Zustand vollständig ringförmig von den miteinander verbundenen Tüllenteilbereichen umschlossen ist. Die beiden Tüllenteilbereiche können hierbei zwei komplett separate Komponenten sein, welche im vormontierten Zustand, d.h. bevor die Tülle um die Leitung herum zusammengesetzt wird, vollständig voneinander getrennt werden können. Für den montierten Zustand können die Tüllenteilbereiche dann zusammengesetzt und miteinander verbunden werden, um so die Leitung vollständig ringförmig zu umschließen. In diesem montierten Zustand kann die Tülle dann an dem Halter arretiert werden und so die Leitung dichtend an dem Halter fixieren. Alternativ können die Tüllenteilbereiche bereits im vormontierten Zustand zumindest in Teilregionen miteinander verbunden sein. Die beiden Tüllenteilbereiche weisen hierbei jedoch wenigstens jeweils eine Seitenkante auf, die im vormontierten Zustand nicht miteinander verbunden sind. An dieser Seitenkante kann die Leitung in die Tülle eingelegt werden.

Aus den Druckschriften US 4,564,163 A, DE 10 2011 010 998 A1, JP 2013 013232 A und US 4,248,459 sind jeweils Befestigungsvorrichtungen für eine Leitung in einem Fahrzeug bekannt.

Aus der US 2002/0000499 A1 ist eine gattungsgemäße Befestigungsvorrichtung für eine Leitung in einem Fahrzeug bekannt. Bei der offenbarten Befestigungsvorrichtung ist die Leitung als Wellrohr ausgeführt, welches am Außenumfang radiale Rippen aufweist. Das Wellrohr dient als Schutzschlauch, in welchem elektrische Kabel geführt sind. Die Befestigungsvorrichtung umfasst einen das Wellrohr umschließenden Träger, welcher einen mehrteiligen Grundkörper mit mindestens zwei Teilgrundkörpern aufweist, welche derart zumindest teilweise voneinander trennbar sind, dass ein Innenbereich des Grundkörpers in einem vormontierten Zustand um das Wellrohr gelegt werden kann, und welche derart miteinander verbindbar sind, dass der Grundkörper des Trägers in einem montierten Zustand das Wellrohr vollständig ringförmig umschließt. Am Innenbereich des Grundkörpers ist eine Fixierstruktur ausgebildet, welche im montierten Zustand den Träger in den Rippen des Wellrohrs axial fixiert. Ein Befestigungselement weist eine Befestigungsstruktur und eine Halterung auf, welche das Befestigungselement lösbar und radialbeweglich mit dem Träger verbindet.

### Offenbarung der Erfindung

Die erfindungsgemäße Befestigungsvorrichtung für eine Leitung in einem Fahrzeug mit den Merkmalen des unabhängigen Patentanspruchs 1 hat demgegenüber den Vorteil, dass die Befestigungsvorrichtung mehrteilig mit einem Träger und einem Befestigungselement ausgeführt ist. Hierbei umschließt der Träger die Leitung in einem montierten Zustand vollständig und ist über eine Fixierstruktur auf der Leitung axial fixiert. In vorteilhafter Weise ist das Befestigungselement lösbar und radialbeweglich mit dem Träger verbunden und kann im montierten Zustand einfach und schnell und ohne bzw. mit geringem Kraftaufwand in eine gewünschte radiale Position bewegt werden. Durch die lösbare Verbindung zwischen dem Träger und dem Befestigungselement ist ein einfacher und schneller Austausch des Befestigungselements möglich.

Ausführungsformen der vorliegenden Erfindung stellen eine Befestigungsvorrichtung für eine Leitung, welche als elektrisches Kabel ausgeführt ist, in einem Fahrzeug zur Verfügung, welche einen die Leitung umschließenden Träger umfasst, welcher einen mehrteiligen Grundkörper mit mindestens zwei Teilgrundkörpern aufweist, welche derart zumindest teilweise voneinander trennbar sind, dass ein Innenbereich des Grundkörpers in einem vormontierten Zustand um die Leitung legbar ist, und welche derart miteinander verbindbar sind, dass der Grundkörper des Trägers in einem montierten Zustand die Leitung vollständig ringförmig umschließt. Hierbei ist am Innenbereich des Grundkörpers eine Fixierstruktur ausgebildet, welche im montierten Zustand den Träger an der Leitung fixiert. Zudem ist ein Befestigungselement mit einer Befestigungsstruktur und einer Halterung vorgesehen, welche das Befestigungselement radialbeweglich mit dem Träger verbindet. Das Befestigungselement kann dann mit einem korrespondierenden karosserieseitigen Befestigungselement, welches beispielsweise als Befestigungsöffnung ausgeführt ist, zusammenwirken, um die Leitung im Fahrzeug zu befestigen.

Hierbei ist die Fixierstruktur als Rippenstruktur mit mindestens einer radial verlaufenden Rippe und/oder mindestens einer axial verlaufenden Rippe ausgebildet, welche im montierten Zustand mindestens eine Vertiefung im Mantel der Leitung erzeugt. Der Grundkörper des Trägers weist somit zumindest eine größere Härte als der Mantel der Leitung auf, um die Vertiefungen im Leitungsmantel zur Fixierung des Trägers zu erzeugen. Die Rippenstruktur kann zumindest eine radial verlaufende Rippe umfassen, um den Träger axial auf der Leitung zu fixieren. Zusätzlich kann die Rippenstruktur axial verlaufende Rippen aufweisen, um den Träger radial auf der Leitung zu fixieren.

Durch die in den abhängigen Ansprüchen aufgeführten Maßnahmen und Weiterbildungen sind vorteilhafte Verbesserungen der im unabhängigen Patentanspruch 1 angegebenen Befestigungsvorrichtung für eine Leitung in einem Fahrzeug möglich.

In weiterer vorteilhafter Ausgestaltung der erfindungsgemäßen Befestigungsvorrichtung kann am Außenumfang des Grundkörpers eine erste Haltestruktur ausgebildet werden. Die erste Haltestruktur kann beispielsweise als umlaufende ringförmige Vertiefung mit U-förmigem Querschnitt ausgebildet werden.

In weiterer vorteilhafter Ausgestaltung der erfindungsgemäßen Befestigungsvorrichtung kann die Halterung einen Grundkörper mit einem runden Innenbereich aufweisen, welcher im montierten Zustand den Träger zumindest teilweise umschließen kann. Zudem kann eine zweite Haltestruktur am Innenbereich des Grundkörpers ausgebildet werden, welche im montierten Zustand in die erste Haltestruktur eingreifen kann. Die zweite Haltestruktur kann beispielsweise als Radialrippe ausgebildet werden. Die Wandung der ringförmigen Vertiefung, in welche die Radialrippe eingreift, ermöglicht in vorteilhafter Weise eine axiale Führung der Halterung des Befestigungselements, so dass sich die axiale Position des Befestigungselements während einer Drehbewegung in die gewünschte radiale Position nicht verändert.

In weiterer vorteilhafter Ausgestaltung der erfindungsgemäßen Befestigungsvorrichtung kann die Halterung einen federelastischen C-förmigen Grundkörper aufweisen, welcher auf den Grundkörper des Trägers aufgeklipst und radial beweglich geführt ist. Dies ermöglicht eine besondere einfache und schnelle Verbindung des Befestigungselements mit dem Träger. Die als Radialrippe ausgeführte zweite Haltestruktur kann beispielsweise mittig am Innenbereich des Grundkörpers angeordnet werden und in die als ringförmige Vertiefung ausgeführte erste Haltestruktur eingreifen. Dadurch kann eine axiale Bewegung der Halterung mit der Befestigungskontur in vorteilhafter Weise verhindert werden kann, während eine radiale Bewegung der Halterung mit der Befestigungskontur weiter möglich bleibt. Zudem ermöglicht der federelastische C-förmige Grundkörper der Halterung eine einfache und schnelle Montage und Demontage der Leitung im Fahrzeug. Der Grundkörper der Halterung kann mit einem definierten Kraftaufwand auf den Träger aufgesteckt und abgezogen werden.

Alternativ kann die Halterung einen mehrteiligen Grundkörper mit mindestens zwei Teilgrundkörpern aufweisen, welche derart zumindest teilweise voneinander trennbar sind, dass der Grundkörper der Halterung in einem vormontierten Zustand mit seinem Innenbereich um den Grundkörper des Trägers legbar ist, und welche derart miteinander verbindbar sind, dass der Grundkörper der Halterung in einem montierten Zustand den Grundkörper des Trägers vollständig ringförmig umschließt. Zudem können die Teilgrundkörper der Halterung im vormontierten Zustand jeweils entlang einer Seitenkante über ein integriertes Gelenk miteinander verbunden werden, wobei die Teilgrundkörper der Halterung im montierten Zustand durch eine zusätzliche formschlüssige Verbindung miteinander verbunden werden können. Der Grundkörper der Halterung kann vorzugsweise zwei Teilgrundkörper umfassen, welche jeweils einen halbkreisförmigen Innenbereich aufweisen, an welchem die als Radialrippe ausgeführte zweite Haltestruktur etwa mittig angeordnet werden kann. Die Teilgrundkörper können im vormontierten Zustand jeweils entlang einer Seitenkante über ein integriertes Gelenk miteinander verbunden werden. Das Gelenk kann beispielsweise als Kunststoffhaut, Scharnier oder Spannfeder ausgeführt werden. Die an einer Seitenkante miteinander verbundenen Teilgrundkörper können über die offenen Seitenkanten einfach so um den Träger gelegt werden, dass die Radialrippe in die als ringförmige Vertiefung ausgeführte erste Haltestruktur eingreifen kann. An der jeweils offenen Seitenkante können die Teilgrundkörper über eine formschlüssige Verbindung miteinander verbunden werden.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische Darstellung eines Ausführungsbeispiels einer erfindungsgemäßen Befestigungsvorrichtung für eine Leitung in einem Fahrzeug im montierten Zustand.
Fig. 2 zeigt eine schematische Darstellung eines Ausführungsbeispiels eines Trägers für die erfindungsgemäße Befestigungsvorrichtung für eine Leitung in einem Fahrzeug aus Fig. 1 im montierten Zustand.
Fig. 3 zeigt eine schematische Darstellung des Ausführungsbeispiels des Trägers aus Fig. 2 vor der Montage.
Fig. 4 zeigt eine schematische Darstellung eines Ausführungsbeispiels eines Befestigungselements für die erfindungsgemäße Befestigungsvorrichtung für eine Leitung in einem Fahrzeug aus Fig. 1.
Fig. 5 zeigt eine schematische Darstellung des Ausführungsbeispiels des Befestigungselements aus Fig. 4 von unten.
Fig. 6 zeigt eine schematische Darstellung eines weiteren Ausführungsbeispiels eines Befestigungselements für die erfindungsgemäße Befestigungsvorrichtung für eine Leitung in einem Fahrzeug aus Fig. 1.

### Ausführungsformen der Erfindung

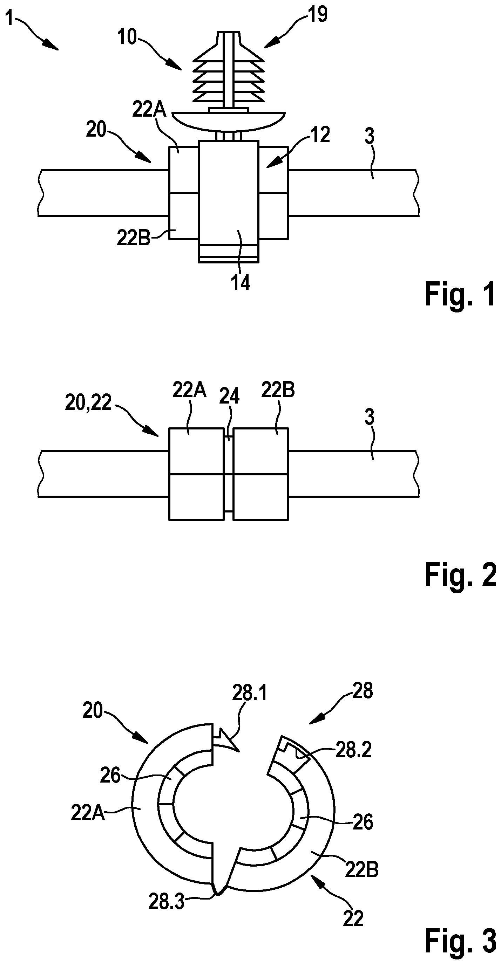

Wie aus Fig. 1 bis 6 ersichtlich ist, umfassen die dargestellten Ausführungsbeispiele einer erfindungsgemäßen Befestigungsvorrichtung 1 für eine Leitung 3, welche als elektrisches Kabel ausgeführt ist, in einem Fahrzeug, jeweils einen die Leitung 3 umschließenden Träger 20, welcher einen mehrteiligen Grundkörper 22 mit mindestens zwei Teilgrundkörpern 22A, 22B aufweist, welche derart zumindest teilweise voneinander trennbar sind, dass ein Innenbereich des Grundkörpers 22 in einem vormontierten Zustand um die Leitung 3 legbar ist, und welche derart miteinander verbindbar sind, dass der Grundkörper 22 des Trägers 20 in einem montierten Zustand die Leitung 3 vollständig ringförmig umschließt. Hierbei ist am Innenbereich des Grundkörpers 22 eine Fixierstruktur 26 ausgebildet, welche im montierten Zustand den Träger 20 an der Leitung 3 axial fixiert. Hierbei weist ein Befestigungselement 10, 10A eine Befestigungsstruktur 19, 19A und eine Halterung 12, 12A auf, welche das Befestigungselement 10, 10A lösbar und radialbeweglich mit dem Träger 20 verbindet.

Wie aus Fig. 3 weiter ersichtlich ist, ist die Fixierstruktur 26 im dargestellten Ausführungsbeispiel als Rippenstruktur mit einer radial verlaufenden Rippe und mehreren axial verlaufenden Rippen ausgebildet, welche im montierten Zustand mindestens eine Vertiefung im Mantel der Leitung 3 erzeugen. Der Grundkörper 22 des Trägers 20 bzw. die Rippen weisen somit zumindest eine größere Härte als der Mantel der Leitung 3 auf, um die Vertiefungen im Leitungsmantel zur Fixierung des Trägers 20 zu erzeugen. Der Grundkörper 22 des Trägers 20 wird vorzugsweise als Spritzgussteil aus einem Kunststoff, wie beispielsweise einem Polyamid (PA6.6) gefertigt, welcher über eine gute Steifigkeit, Härte, Abriebfestigkeit und Wärmeformbeständigkeit verfügt. Selbstverständlich können auch andere geeignete Kunststoffe zur Herstellung des Grundkörpers 22 verwendet werden.

Durch diese Rippenstruktur ist der Grundkörper 22 des Trägers 20 axial und radial auf der Leitung 3 fixiert. Bei einem nicht dargestellten Ausführungsbeispiel umfasst die als Rippenstruktur ausgeführte Fixierstruktur 26 zumindest eine radial verlaufende Rippe, um den Träger 20 axial auf der Leitung 3 zu fixieren. Der Grundkörper 22 des Trägers 20 umfasst im dargestellten Ausführungsbeispiel zwei halbkreisförmige Teilgrundkörper 22A, 22B, welche im vormontierten Zustand jeweils entlang einer Seitenkante über ein integriertes Gelenk 28.3 miteinander verbunden sind. Im dargestellten Ausführungsbeispiel ist das Gelenk 28.3 als Kunststoffhaut ausgeführt. Alternativ kann das Gelenk 28.3 beispielsweise als Scharnier oder Spannfeder ausgeführt werden. Die an einer Seitenkante miteinander verbundenen Teilgrundkörper 22A, 22B können über die offene Seitenkanten einfach um die Leitung 3 gelegt werden. An der jeweils offenen Seitenkante können die Teilgrundkörper 22A, 22B über eine mechanische Verbindung 28 miteinander verbunden werden. Die mechanische Verbindung 28 ist im dargestellten Ausführungsbeispiel als formschlüssige Klipsverbindung mit korrespondierenden zusammenwirkenden Verbindungskonturen 28.1, 28.2 ausgeführt, welche so ineinander gesteckt werden können, dass der Grundkörper 22 des Trägers 20 die Leitung 3 im montierten Zustand vollständig ringförmig umschließt. Im dargestellten Ausführungsbeispiel umfasst ein erster Teilgrundkörper 22A eine als Rastnase ausgeführte erste Verbindungskontur 28.1, welche mit einer korrespondierenden als Rastvertiefung ausgeführten zweiten Verbindungskontur 28.2 eines zweiten Teilgrundkörpers 22B rastend zusammenwirkt.

Wie aus Fig. 2 weiter ersichtlich ist, ist am Außenumfang des Grundkörpers 22 eine erste Haltestruktur 24 ausgebildet. Im dargestellten Ausführungsbeispiel ist die erste Haltestruktur 24 als umlaufende ringförmige Vertiefung mit U-förmigem Querschnitt ausgebildet, welche etwa mittig am Grundkörper 22 angeordnet ist. Wie aus Fig. 1, 4 und 6 weiter ersichtlich ist, sind die Befestigungsstrukturen 19, 19A der dargestellten Ausführungsbeispiele des Befestigungselements 10, 10A jeweils als Tannenbaumklips ausgeführt, welcher in eine entsprechende nicht dargestellte Befestigungsöffnung in der Fahrzeugkarosserie eingeklipst werden kann. Selbstverständlich können die Befestigungsstrukturen auch eine andere geeignete Form aufweisen, um an der Fahrzeugkarosserie befestigt zu werden. Die Halterungen 12, 12A der dargestellten Ausführungsbeispiele des Befestigungselements 10, 10A weisen jeweils einen Grundkörper 14, 14A mit einem runden Innenbereich auf, welcher im montierten Zustand den Träger 20 zumindest teilweise umschließt. Zudem ist eine zweite Haltestruktur 16, 16A am Innenbereich des Grundkörpers 14, 14A ausgebildet ist, welche im montierten Zustand in die erste Haltestruktur 24 des Trägers 20 eingreift. Bei den dargestellten Ausführungsbeispielen ist die zweite Haltestruktur 16, 16A jeweils als Radialrippe ausgebildet.

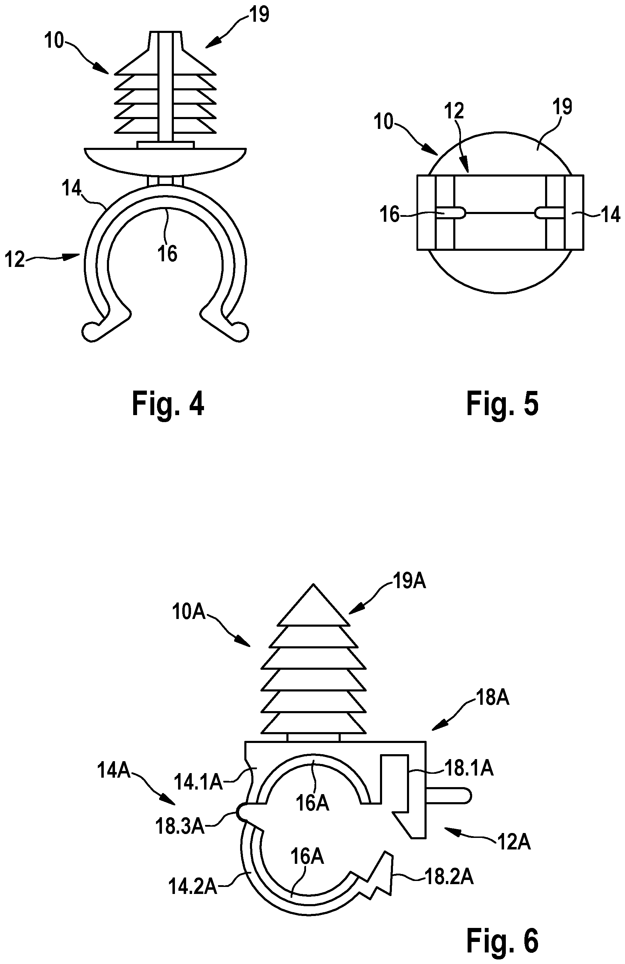

Wie aus Fig. 4 und 5 weiter ersichtlich ist, weist die Halterung 12 im dargestellten Ausführungsbeispiel einen federelastischen C-förmigen Grundkörper 14 auf, welcher auf den Grundkörper 22 des Trägers 20 aufgeklipst und radial beweglich geführt ist. Die als Radialrippe ausgeführte zweite Haltestruktur 16 ist mittig am Innenbereich des Grundkörpers 14 angeordnet und greift im montierten Zustand in die als ringförmige Vertiefung ausgeführte erste Haltestruktur 24 ein. Dadurch kann eine axiale Bewegung des Befestigungselements 10 in vorteilhafter Weise verhindert werden, während eine radiale Bewegung des Befestigungselements 10 weiter möglich ist und das Befestigungselement 10 in die gewünschte radiale Position gedreht werden kann. Durch den federelastischen C-förmigen Grundkörper 14 kann der Grundkörper 14 der Halterung 12 über die Öffnung mit einem definierten Kraftaufwand auf den Grundkörper 22 des Trägers aufgesteckt bzw. abgezogen werden.

Wie aus Fig. 6 weiter ersichtlich ist, weist die Halterung 12A im dargestellten Ausführungsbeispiel einen mehrteiligen Grundkörper 14A mit mindestens zwei Teilgrundkörpern 14.1A, 14.2A auf. Die Teilgrundkörper 14.1A, 14.2A können derart zumindest teilweise voneinander getrennt werden, dass der Grundkörper 14A der Halterung 12A in einem vormontierten Zustand mit seinem Innenbereich um den Grundkörper 22 des Trägers 20 gelegt werden kann. Zudem können die Teilgrundkörper 14.1A, 14.2A derart miteinander verbunden werden, dass der Grundkörper 14A der Halterung 12A in einem montierten Zustand den Grundkörper 22 des Trägers 20 vollständig ringförmig umschließt.

Wie aus Fig. 6 weiter ersichtlich ist, weist der Grundkörper 14A der Halterung 12 im dargestellten Ausführungsbeispiel zwei Teilgrundkörper 14.1A, 14.2A auf, welche jeweils einen halbkreisförmigen Innenbereich aufweisen, an welchem die als Radialrippe ausgeführte zweite Haltestruktur 16A etwa mittig angeordnet ist. Die Teilgrundkörper 14.1A, 14.2A des Grundkörpers 14A sind im dargestellten vormontierten Zustand jeweils entlang einer Seitenkante über ein integriertes Gelenk 18.3A miteinander verbunden. Im dargestellten Ausführungsbeispiel ist das Gelenk 18.3A als Kunststoffhaut ausgeführt. Alternativ kann das Gelenk 18.3 beispielsweise als Scharnier oder Spannfeder ausgeführt werden. Die an einer Seitenkante miteinander verbundenen Teilgrundkörper 14.1A, 14.2A können über die offenen Seitenkanten einfach so um den Grundkörper 22 des Trägers 20 gelegt werden, dass die als Radialrippe ausführte zweite Haltestruktur 16A in die als ringförmige Vertiefung ausgeführte erste Haltestruktur24 eingreifen kann. An der jeweils offenen Seitenkante können die Teilgrundkörper 14.1A, 14.2A über eine formschlüssige Verbindung 18A miteinander verbunden werden. Die formschlüssige Verbindung 18A ist im dargestellten Ausführungsbeispiel als Klipsverbindung mit korrespondierenden zusammenwirkenden Verbindungskonturen 18.1A, 18.2A ausgeführt sind, welche so ineinander gesteckt werden können, dass der Grundkörper 14A der Halterung 12A den Grundkörper 22 des Trägers 20 vollständig ringförmig umschließt. Im dargestellten Ausführungsbeispiel umfasst ein erster Teilgrundkörper 14.1A der Halterung 12A eine als Rastvertiefung ausgeführte erste Verbindungskontur 28.1, welche mit einer korrespondierenden als Rastnase ausgeführten zweiten Verbindungskontur 28.2 eines zweiten Teilgrundkörpers 14.2A der Halterung 12A rastend zusammenwirkt.

## Patentansprüche

1. Befestigungsvorrichtung (1) für eine Leitung (3) in einem Fahrzeug, mit einem die Leitung (3) umschließenden Träger (20), welcher einen mehrteiligen Grundkörper (22) mit mindestens zwei Teilgrundkörpern (22A, 22B) aufweist, welche derart zumindest teilweise voneinander trennbar sind, dass ein Innenbereich des Grundkörpers (22) in einem vormontierten Zustand um die Leitung (3) legbar ist, und welche derart miteinander verbindbar sind, dass der Grundkörper (22) des Trägers (20) in einem montierten Zustand die Leitung (3) vollständig ringförmig umschließt, wobei am Innenbereich des Grundkörpers (22) eine Fixierstruktur (26) ausgebildet ist, welche im montierten Zustand den Träger (20) an der Leitung (3) axial fixiert, wobei ein Befestigungselement (10, 10A) eine Befestigungsstruktur (19, 19A) und eine Halterung (12, 12A) aufweist, welche das Befestigungselement (10, 10A) lösbar und radialbeweglich mit dem Träger (20) verbindet, **gekennzeichnet durch** die als elektrisches Kabel ausgeführte Leitung (3) und die als Rippenstruktur mit mindestens einer radial verlaufenden Rippe und/oder mindestens einer axial verlaufenden Rippe ausgebildete Fixierstruktur (26), welche im montierten Zustand mindestens eine Vertiefung im Mantel der Leitung (3) erzeugt.

2. Befestigungsvorrichtung nach Anspruch 1, **dadurch gekennzeichnet, dass** am Außenumfang des Grundkörpers (22) eine erste Haltestruktur (24) ausgebildet ist.

3. Befestigungsvorrichtung nach Anspruch 2, **dadurch gekennzeichnet, dass** die erste Haltestruktur (24) als umlaufende ringförmige Vertiefung mit U-förmigem Querschnitt ausgebildet ist.

4. Befestigungsvorrichtung nach einem der Ansprüche 1 bis 3, **dadurch gekennzeichnet, dass** die Halterung (12, 12A) einen Grundkörper (14, 14A) mit einem runden Innenbereich aufweist, welcher im montierten Zustand den Träger (20) zumindest teilweise umschließt.

5. Befestigungsvorrichtung nach Anspruch 4, **dadurch gekennzeichnet, dass** eine zweite Haltestruktur (16, 16A) am Innenbereich des Grundkörpers (14, 14A) ausgebildet ist, welche im montierten Zustand in die erste Haltestruktur (24) eingreift.

6. Befestigungsvorrichtung nach Anspruch 5, **dadurch gekennzeichnet, dass** die zweite Haltestruktur (16, 16A) als Radialrippe ausgebildet ist.

7. Befestigungsvorrichtung nach einem der Ansprüche 1 bis 6, **dadurch gekennzeichnet, dass** die Halterung (12) einen federelastischen C-förmigen Grundkörper (14) aufweist, welcher auf den Grundkörper (22) des Trägers (20) aufgeklipst und radial beweglich geführt ist.

8. Befestigungsvorrichtung nach einem der Ansprüche 1 bis 6, **dadurch gekennzeichnet, dass** die Halterung (12A) einen mehrteiligen Grundkörper (14A) mit mindestens zwei Teilgrundkörpern (14.1A, 14.2A) aufweist, welche derart zumindest teilweise voneinander trennbar sind, dass der Grundkörper (14A) der Halterung (12A) in einem vormontierten Zustand mit seinem Innenbereich um den Grundkörper (22) des Trägers (20) legbar ist, und welche derart miteinander verbindbar sind, dass der Grundkörper (14A) der Halterung (12A) in einem montierten Zustand den Grundkörper (22) des Trägers (20) vollständig ringförmig umschließt.

9. Befestigungsvorrichtung nach Anspruch 8, **dadurch gekennzeichnet, dass** die Teilgrundkörper (14.1A, 14.2A) der Halterung (12A) im vormontierten Zustand jeweils entlang einer Seitenkante über ein integriertes Gelenk (18.3A) miteinander verbunden sind, wobei die Teilgrundkörper (14.1A, 14.2A) der Halterung (12A) im montierten Zustand durch eine zusätzliche formschlüssige Verbindung (18A) miteinander verbunden sind.

## Claims

1. Fastening device (1) for a line (3) in a vehicle, with a carrier (20) enclosing the line (3), which carrier (20) has a multi-part base body (22) with at least two partial base bodies (22A, 22B) which can be separated at least partially from one another in such a manner that an inner region of the base body (22), in a premounted state, can be placed around the line (3), and which can be connected to one another in such a manner that the base body (22) of the carrier (20), in a mounted state, encloses the line (3) in a fully annular manner, wherein a fixing structure (26) is formed on the inner region of the base body (22), which fixing structure (26), in the mounted state, axially fixes the carrier (20) on a line (3), wherein a fastening element (10, 10A) has a fastening structure (19, 19A) and a holder (12, 12A) which connects fastening element (10, 10A) detachably and radially movably to the carrier (20),
**characterized by** the line (3) which is embodied as an electric cable and the fixing structure (26) which is formed as a rib structure with at least one radially running rib and/or at least one axially running rib which, in the mounted state, generates at least one recess in the casing of the line (3).

2. Fastening device as claimed in Claim 1, **characterized in that** a first holding structure (24) is formed on the outer circumference of the base body (22).

3. Fastening device as claimed in Claim 2, **characterized in that** the first holding structure (24) is formed as a circumferential annular recess with a U-shaped cross-section.

4. Fastening device as claimed in any one of Claims 1 to 3, **characterized in that** the holder (12, 12A) has a base body (14, 14A) with a round inner region which, in the mounted state, at least partially encloses the carrier (20).

5. Fastening device as claimed in Claim 4, **characterized in that** a second holding structure (16, 16A) is formed on the inner region of the base body (14, 14A) which, in the mounted state, engages into the first holding structure (24).

6. Fastening device as claimed in Claim 5, **characterized in that** the second holding structure (16, 16A) is formed as a radial rib.

7. Fastening device as claimed in any one of Claims 1 to 6, **characterized in that** the holder (12) has a spring-elastic C-shaped base body (14) which is guided in a manner clipped onto the base body (22) of the carrier (20) and radially movably.

8. Fastening device as claimed in any one of Claims 1 to 6, **characterized in that** the holder (12A) has a multi-part base body (14A) with at least two partial base bodies (14.1A, 14.2A) which can be at least partially separated from one another in such a manner that the base body (14A) of the holder (12A), in a premounted state, can be placed with its inner region around the base body (22) of the carrier (20) and which can be connected to one another in such a manner that the base body (14A) of the holder (12A), in a mounted state, encloses the base body (22) of the carrier (20) in a fully annular manner.

9. Fastening device as claimed in Claim 8, **characterized in that** the partial base bodies (14.1A, 14.2A) of the holder (12A), in the premounted state, are connected to one another in each case along a side edge via an integrated joint (18.3A), wherein the partial base bodies (14.1A, 14.2A) of the holder (12A), in the mounted state, are connected to one another by an additional form-fitting connection (18A).

## Revendications

1. Dispositif de montage (1) pour un câble (3) dans un véhicule, avec un support (20) entourant le câble (3), qui présente un corps de base en plusieurs parties (22) avec au moins deux corps de base partiels (22A, 22B), qui sont au moins partiellement séparables l'un de l'autre, de telle manière qu'une région intérieure du corps de base (22) puisse dans un état préassemblé être posée autour du câble (3), et qui peuvent être assemblés l'un à l'autre de telle manière que le corps de base (22) du support (20) entoure entièrement le câble (3) sous forme annulaire à l'état assemblé, dans lequel une structure de fixation (26) est formée sur la région intérieure du corps de base (22) et dans l'état assemblé fixe axialement le support (20) au câble (3), dans lequel un élément de montage (10, 10A) présente une structure de montage (19, 19A) et un support (12, 12A), qui relie l'élément de montage (10, 10A) de façon séparable et mobile radialement au support (20), **caractérisé par** le câble (3) formé par un câble électrique et la structure de fixation (26) réalisée sous la forme d'une structure nervurée avec au moins une nervure s'étendant radialement et/ou au moins une nervure s'étendant axialement, qui produit à l'état monté au moins un creux dans l'enveloppe du câble (3).

2. Dispositif de montage selon la revendication 1, **caractérisé en ce qu'**une première structure de maintien (24) est formée sur la périphérie extérieure du corps de base (22).

3. Dispositif de montage selon la revendication 2, **caractérisé en ce que** la première structure de maintien (24) est réalisée sous la forme d'un creux annulaire périphérique avec une section transversale en forme de U.

4. Dispositif de montage selon l'une quelconque des revendications 1 à 3, **caractérisé en ce que** le support (12, 12A) présente un corps de base (14, 14A) avec une région intérieure ronde, qui dans l'état assemblé entoure au moins partiellement le support (20).

5. Dispositif de montage selon la revendication 4, **caractérisé en ce qu'**une deuxième structure de maintien (16, 16A) est formée sur la région intérieure du corps de base (14, 14A), et s'engage à l'état assemblé dans la première structure de maintien (24).

6. Dispositif de montage selon la revendication 5, **caractérisé en ce que** la deuxième structure de maintien (16, 16A) est réalisée sous la forme d'une nervure radiale.

7. Dispositif de montage selon l'une quelconque des revendications 1 à 6, **caractérisé en ce que** le support (12) présente un corps de base élastique en forme de C (14), qui est encliqueté sur le corps de base (22) du support (20) et est guidé de façon mobile radialement.

8. Dispositif de montage selon l'une quelconque des revendications 1 à 6, **caractérisé en ce que** le support (12A) présente un corps de base en plusieurs parties (14A) avec au moins deux corps de base partiels (14.1A, 14.2A), qui sont au moins partiellement séparables l'un de l'autre, de telle manière que le corps de base (14A) du support (12A) puisse dans un état préassemblé être posé avec sa région intérieure autour du corps de base (22) du support (20), et qui peuvent être assemblés l'un à l'autre de telle manière que le corps de base (14A) du support (12A) entoure entièrement sous forme annulaire dans un état monté le corps de base (22) du support (20).

9. Dispositif de montage selon la revendication 8, **caractérisé en ce que** les corps de base partiels (14.1A, 14.2A) du support (12A) sont assemblés l'un à l'autre dans l'état préassemblé, chaque fois le long d'un bord latéral au moyen d'une articulation intégrée (18.3A), dans lequel les corps de base partiels (14.1A, 14.2A) du support (12A) sont reliés l'un à l'autre, dans l'état assemblé, par une liaison supplémentaire par emboîtement (18A).
